# EUROPEAN PATENT SPECIFICATION

(11) **EP 3 933 565 B1**
(45) Date of publication and mention of the grant of the patent: **19.03.2025**
(21) Application number: 21165640.0
(22) Date of filing: 29.03.2021
(51) Int. Cl.: G06F 3/0486, G06F 3/14, G06F 3/0488

(54) **SCREEN PROJECTION METHOD, SCREEN PROJECTION DEVICE, AND STORAGE MEDIUM**
BILDSCHIRMPROJEKTIONSVERFAHREN, BILDSCHIRMPROJEKTIONSVORRICHTUNG UND SPEICHERMEDIUM
PROCÉDÉ DE PROJECTION SUR ÉCRAN, DISPOSITIF DE PROJECTION SUR ÉCRAN ET SUPPORT D'INFORMATIONS

(30) Priority: 30.06.2020 CN 202010623978
(43) Date of publication of application: 05.01.2022
(73) Proprietor: Beijing Xiaomi Mobile Software Co., Ltd., Beijing 100085 (CN)
(72) Inventor: WANG, Yanjiong, Beijing, Beijing 100085 (CN); FAN, Dian, Beijing, Beijing 100085 (CN); HUA, Chengping, Beijing, Beijing 100085 (CN)
(74) Representative: dompatent von Kreisler Selting Werner - Partnerschaft von Patent- und Rechtsanwälten mbB

(56) References cited:
- EP-A1- 2 755 370
- EP-A1- 3 582 098
- CN-A- 110 515 579
- US-A1- 2021 064 191

## Description

### TECHNICAL FIELD

The present disclosure relates to the field of terminal technologies, and more particularly, to a screen projection method, a screen projection device, and a storage medium.

### BACKGROUND

With the development of terminal technologies, more and more functions may be implemented with terminals. For example, a window interface such as a small window (a floating window) may be displayed on a terminal to allow a user to operate other applications while watching a video on the terminal. For another example, the terminal may support screen projection technology. The screen projection technology refers to a technology for synchronizing contents on a terminal device, such as a mobile phone, to other large-screen devices, such as a TV, in real time.
Document EP2755370A1 discloses a mobile terminal and controlling method of the mobile terminal. Document EP3582098A1 discloses a method for sharing screen. Document CN110515579A discloses a screen projection method and device, a terminal and a storage medium.

### SUMMARY

According to a first aspect of embodiments of the present disclosure, a screen projection method is provided as defined in the amended claim 1.

The obtaining the specified operation performed by the user on the window interface displayed on the first terminal may include obtaining the specified operation performed by the user on the window interface directly.

Optionally, the specified operation may include at least one of: sliding the window interface with a pressure above a specified pressure threshold; and dragging the window interface over a distance greater than a specified distance threshold.

Optionally, the specified operation may include dragging the window interface to the specified region on the display screen of the first terminal, the specified region is bounded with the first display boundary and a second display boundary with a preset distance from the first display boundary, and in response to obtaining the specified operation performed on the window interface, the method may also include: in response to the window interface moving to the second display boundary, performing at least one of: controlling the window interface to disappear; and controlling the window interface to disappear gradually by displaying the window interface in a way of moving out of the display screen of the first terminal.

Optionally, the method may further include determining the second terminal for displaying the window interface through projection, by at least one of: determining the second terminal for displaying the window interface through projection, by at least one of: determining the second terminal for displaying the window interface through projection based on history screen projection information of the first terminal, the history screen projection information comprising all or part of terminals that have established a screen projection connection with the first terminal; and displaying a list of terminals, and determining a terminal selected from the list of terminals by the user as the second terminal for displaying the window interface through projection, in response to obtaining the terminal selected from the list of terminals by the user.

Optionally, the window interface may be a floating window displayed on the first terminal.

Optionally, a first application user interface may be displayed in the floating window, and a second application user interface may be displayed on the first terminal, the floating window floating above the second application user interface.

Optionally, the window interface may include at least one of: a current active window of the first terminal; and an inactive window of the first terminal.

Optionally, the window interface may be in a full-screen display state; and in response to obtaining the specified operation performed on the window interface, the method may further include: controlling the window interface to quit the full-screen display state.

According to a second aspect of embodiments of the present disclosure, a first terminal is provided as defined in the claim 7.

The processor may be further configured to obtain the specified operation performed by the user on the window interface directly.

Optionally, the specified operation may include at least one of: sliding the window interface with a pressure above a specified pressure threshold; and dragging the window interface over a distance greater than a specified distance threshold.

Optionally, the specified operation may include dragging the window interface to the specified region on the display screen of the first terminal, a boundary of the specified region is bounded with the first display boundary and a second display boundary with a preset distance from the first display boundary, and in response to obtaining the specified operation performed on the window interface, the processor may be further configured to in response to the window interface moving to the second display boundary, perform at least one of: controlling the window interface to disappear; and controlling the window interface to disappear gradually by displaying the window interface in a way of moving out of the display screen of the first terminal.

Optionally, the processor may be further configured to determine the second terminal for displaying the window interface through projection by at least one of: determining the second terminal for displaying the window interface through projection based on history screen projection information of the first terminal, the history screen projection information comprising all or part of terminals that have established a screen projection connection with the first terminal; and displaying a list of terminals, and determining a terminal selected from the list of terminals by the user as the second terminal for displaying the window interface through projection, in response to obtaining the terminal selected from the list of terminals by the user.

Optionally, the window interface may be a floating window displayed on the first terminal.

Optionally, a first application user interface may be displayed in the floating window, and a second application user interface may be displayed on the first terminal, the floating window floating above the second application user interface.

Optionally, the window interface may include at least one of: a current active window of the first terminal; and an inactive window of the first terminal.

Optionally, when the window interface is in a full-screen display state, the processor may be further configured to control the window interface to quit the full-screen display state.

According to a third aspect of embodiments of the present disclosure, a non-transitory computer-readable storage medium having stored thereon instructions is provided. The instructions, when executed by a processor of a first terminal, cause the first terminal to perform the screen projection method according to the first aspect.

It should be understood that the above general description and the following detailed description are only illustrative, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flowchart of a screen projection method according to illustrative embodiments of the present disclosure.
FIG. 2 is a flowchart of a response process in response to obtaining a specified operation performed on a window interface in a screen projection method according to illustrative embodiments of the present disclosure.
FIG. 3 is a schematic diagram illustrating a specified operation of a screen projection method according to illustrative embodiments of the present disclosure.
FIG. 4 is a schematic diagram illustrating a moving trajectory intersecting a first display boundary in a screen projection method according to illustrative embodiments of the present disclosure.
FIG. 5 is a schematic diagram illustrating controlling a window to disappear in a screen projection method according to illustrative embodiments of the present disclosure.
FIG. 6 is a schematic diagram illustrating a moving trajectory not intersecting a first display boundary in a screen projection method according to illustrative embodiments of the present disclosure.
FIG. 7 is a flowchart of a response process in response to obtaining a specified operation performed on a window interface in a screen projection method according to illustrative embodiments of the present disclosure.
FIG. 8 is a schematic diagram illustrating displaying a list of terminals in a screen projection method according to illustrative embodiments of the present disclosure.
FIG. 9 is a block diagram of a screen projection apparatus according to illustrative embodiments of the present disclosure.
FIG. 10 is a block diagram of a screen projection device according to illustrative embodiments of the present disclosure.

### DETAILED DESCRIPTION

Reference will now be made in detail to embodiments of the present disclosure, examples of which are illustrated in the accompanying drawings. The following description refers to the accompanying drawings in which the same numbers in different drawings represent the same or similar elements unless otherwise represented. The implementations set forth in the following description of the embodiments of the present disclosure do not represent all implementations consistent with the present disclosure. Instead, they are merely examples of apparatuses and methods consistent with aspects related to the present disclosure as recited in the appended claims.

With increasing development of smart terminals, applications to be installed on a terminal and the functions to be implemented by those applications are increasingly abundant so as to meet increasing demands of users. For example, the users may watch a video, do a live broadcast, study, or the like, through the terminal. The users may also socialize, read news, and understand current news and trends through the terminal. Therefore, the terminals may bring great convenience to the users and are widely welcomed.

In the related art, a current video interface may be zoomed out to a smaller window that is floated over the display interface of the terminal, such that the user may operate other applications on the display interface of the terminal. For example, when the user is watching a video or a live course, and also desires to take other actions such as browsing webpages or conducting an instant chat on the terminal at the same time, the video or the live course currently watched may be displayed in the smaller window as a floating window, to allow the user to conduct the operations such as browsing the webpages or conducting the instant chat on the terminal at the same time.

In addition, the terminal may project contents to be played or to be projected onto a screen of a large-screen terminal device through a connection with a second terminal, or project contents played in a floating window onto the screen of the large-screen terminal device directly. However, during the screen projection, upon the terminal and the large-screen terminal device are connected successfully, the user needs to find a screen projection icon in a drop-down menu of the terminal, and touch and click the screen projection icon through the display interface of the terminal. Then, the terminal displays a list of large-screen terminal devices that are available for the screen projection in response to detecting the triggering operation of the screen projection. Finally, the contents to be projected may be projected onto the screen of the second terminal in response to detecting a large-screen terminal device that has been selected. In the related art, it is cumbersome and complicated to implement the screen projection from the terminal onto the large-screen terminal device.

The present disclosure provides a screen projection method. With the method, the function of screen projection may be implemented by allowing the user to perform a specified operation on a window interface displayed on a terminal, to project the window interface onto a screen of another terminal for display. The operation of the screen projection method according to the present disclosure is simple, such that a quick screen projection may be implemented based on the specified operation performed by the user.

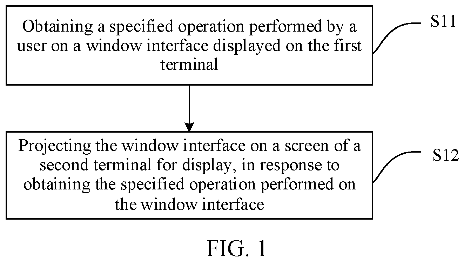

FIG. 1 is a flowchart of a screen projection method according to embodiments of the present disclosure. As shown in FIG. 1, the screen projection method may be applied to the terminal, and may include the following steps.

At step S11, a specified operation performed by a user on a window interface displayed on the first terminal may be obtained.

At step S12, the window interface may be projected onto a screen of a second terminal for display, in response to obtaining the specified operation performed on the window interface.

For ease of description in the present disclosure, a terminal that supports the screen projection, such as a mobile phone, a tablet, etc., is referred to as a first terminal, and a large-screen device that receives contents for the screen projection, such as a television, is referred to as a second terminal.

In some embodiments, the window interface that is displayed on a display screen of the first terminal may be displayed on the display screen of the first terminal as a floating window. Further, the window interface may be moved arbitrarily on the display screen of the first terminal while the contents in the window interface is played normally.

In some embodiments, a video interface or other animation playing interface that is played by the user may be displayed in the floating window. For ease of description, the video interface or other animation playing interface that is played by the user may be referred to as a first application user interface, and the corresponding application may be referred to as a first application in the present disclosure. After the first application user interface is displayed in the floating window, the user may select a second application to open based on the display screen of the first terminal. At this time, the second application opened by the user on the first terminal may run normally without affecting the first application in the window interface. In the present disclosure, for ease of description, the display interface of the second application opened by the user on the display screen of the first terminal that is different from the first application is referred to as a second application user interface. The second application user interface may be an interface of a given application or an interface of the desktop, but is not limited thereto. Further, the floating window may be floating above the second application user interface.

In some embodiments, the window interface may include a current active window or an inactive window of the first application on the display screen of the first terminal. The current active window of the first application indicates that the interface of the first application is receiving focus. For example, if the first application in the window interface is a third-party video application, the current active window of the first application is a window in which the third-party video application is playing a video in the window interface. That is, the window for the third-party video is a focused window. In some embodiments, a current inactive window of the first application indicates that the window interface of the first application is not the focused window. For the active window, the specified operation performed by the user on the active window may be obtained directly. For the inactive window, the user may also perform the specified operation on the inactive window directly, upon the inactive window being first changed to the active window in the background.

In some embodiments, the specified operation performed by the user on the window interface displayed on the first terminal may be an operation that triggers the screen projection of the window interface displayed on the first terminal. There may be a preset correspondence between the specified operation and the screen projection function. The specified operation having the preset correspondence with the screen projection function may be customized by the user, or may be pre-configured when the terminal is shipped from the manufacturer.

In some embodiments, the specified operation performed on the window interface displayed on the first terminal is a specified operation performed by the user on the window interface based on the display screen of the first terminal. The specified operation may include any operation such as sliding, dragging, and clicking. However, the embodiments of the present disclosure are not limited to those specified operations.

The specified operation performed on the window interface may include dragging the window interface to a specified region on the display screen of the first terminal, or sliding the window interface with a pressure above a specified pressure threshold, or dragging the window interface over a distance greater than a specified distance threshold. The specified operation may also include an operation such as clicking. Here, the specified operation of dragging the window interface to the specified region on the display screen of the first terminal will be taken as an example for description.

In some embodiments, when the user needs to project the contents in the window interface displayed on the display screen of the first terminal onto the screen of the second terminal, the user may perform a dragging operation on the window interface displayed on the display screen of the first terminal. In response to detecting the dragging operation on the window interface, the first terminal obtains the dragging operation on the window interface.

After obtaining the dragging operation performed on the window interface, the first terminal responds to the dragging operation performed on the window interface, and determines to send an instruction for screen projection of the window interface. Further, the first terminal determines the second terminal for receiving contents for screen projection of the window interface, and sends the contents for screen projection of the window interface to the second terminal. The second terminal receives the contents sent from the first terminal, and displays the received contents on the screen of the second terminal. In the process, a correspondence between the specified operation on the window interface, and the screen projection operation and a target device to be projected may be preset. When the specified operation is detected, the screen projection operation on a preset second terminal may be triggered. As compared with the conventional screen projection operation that is implemented eventually through a series of operations including initiating the screen projection operation through a screen projection option and selecting a target device to be projected, the method according to the embodiments of the present disclosure may be implemented in a simpler and concise process with higher operation efficiency, and may bring better experience to users.

In the above screen projection method, upon obtaining the specified operation performed by the user on the window interface, the contents in the window interface of the first terminal may be projected onto the screen of the second terminal. Accordingly, the screen projection method is easy to operate and takes a short time for performing the screen projection.

In some embodiments, after the first terminal detects the specified operation performed by the user on the display screen, the first terminal responds to the specified operation, by making different responses to different execution results of the specified operations performed on the window interface, so as to project the contents of the window interface onto the screen.

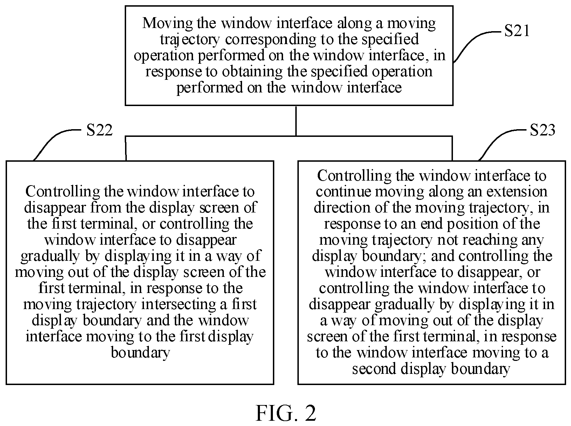

FIG. 2 is a flowchart of a responding process in response to obtaining the specified operation performed on the window interface in the screen projection method according to embodiments of the present disclosure. As shown in FIG. 2, the screen projection method includes steps S21-S23.

At step S21, the window interface is moved along a moving trajectory corresponding to the specified operation performed in the window interface, in response to obtaining the specified operation performed in the window interface.

The specified operation includes dragging the window interface to a specified region on the display screen of the first terminal. A boundary of the specified region includes at least one display boundary of the display screen of the first terminal.

In some embodiments, the window interface is displayed on the display screen of the first terminal, for example, as a floating window. The user may control the movement of the window interface by pressing the window interface and dragging it. When the user presses the window interface, the first terminal may control the window interface to feedback to the user through vibration or the like, to confirm that the window interface is pressed and may be moved. When the user determines that the window interface may be moved based on the feeling of vibration or other feedback from the first terminal, the user may move the window interface in a sliding way. The following embodiments will describe the process of controlling the window interface to move along the moving trajectory formed by sliding on the display screen of the first terminal through the user.

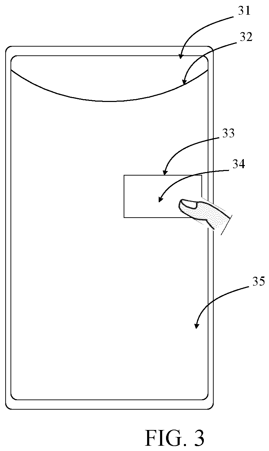

FIG. 3 is a schematic diagram illustrating an example of responding to a specified operation according to embodiments of the present disclosure. As shown in FIG. 3, the specified region is at the top of the first terminal and has a display boundary. For example, the display boundary includes a first display boundary 31 and a second display boundary 32. A window interface 33 is displayed on the display screen of the first terminal, for example, as a floating window. The user may press and move the window interface 33 with a finger.

In the embodiment, the specified region is arranged at the top of the first terminal, and the first display boundary 31 refers to the display boundary on the top of the display screen of the first terminal. It is to be noted that the position of the specified region is not limited to the top of the first terminal. The specified region may be arranged at any side of or at the bottom of the display screen of the first terminal.

In some embodiments, a first application user interface 34 may be displayed in the window interface 33. Further, a second application user interface 35 may also be displayed on the first terminal. The window interface 33 in which the first application user interface 34 is being displayed may float above the second application user interface 35.

Referring back to Fig. 2, at step S22, the window interface is controlled to disappear from the display screen of the first terminal, or the window interface is controlled to disappear gradually by displaying it in a way of moving out of the display screen of the first terminal, in response to a moving trajectory intersecting the first display boundary and the window interface moving to the first display boundary.

In some embodiments, the first terminal obtains the moving trajectory corresponding to the operation and a direction of the moving trajectory, and determines whether the moving trajectory intersects the display boundary of the specified region. If the moving trajectory intersects the first display boundary, the first terminal controls the window interface to move to the intersection with the first display boundary along the moving trajectory and in the direction of the moving trajectory, and controls the window interface to disappear from the first terminal display screen.

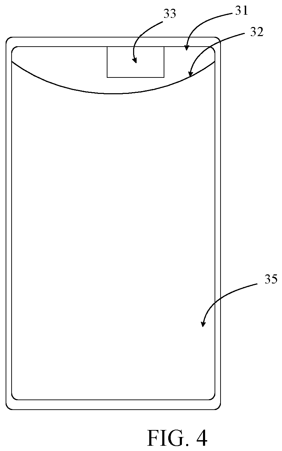

FIG. 4 is a schematic diagram illustrating an example of the moving trajectory intersecting the first display boundary in the screen projection method according to embodiments of the present disclosure. In some embodiments, if the first terminal detects that the moving trajectory corresponding to the operation performed by the user on the first terminal intersects the first display boundary 31, as shown in FIG. 4, it may make a response corresponding to the intersection of the moving trajectory and the first display boundary 31, for example, controlling the window interface 33 to disappear from the display screen of the first terminal, in response to the operation that the moving trajectory intersects the first display boundary 31.

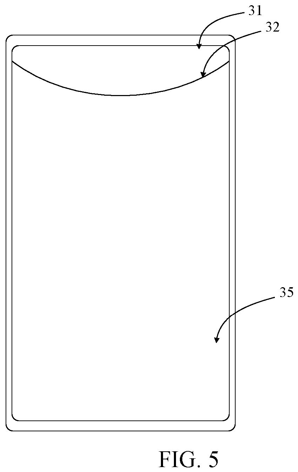

FIG. 5 is a schematic diagram illustrating an example of controlling the window to disappear in the screen projection method according to embodiments of the present disclosure. As shown in FIG. 5, the window interface is controlled to disappear from the display screen of the first terminal. Controlling the window interface to disappear from the display screen of the first terminal may include controlling the window interface to disappear from the display screen of the first terminal directly, or controlling the window interface to disappear gradually by displaying it in a way of moving out of the display screen of the first terminal.

It is to be understood that the moving trajectory of the window interface intersecting the first display boundary may refer to the moving trajectory of the window interface intersecting the first display boundary at any position.

Referring back to Fig. 2, at step S23, the window interface is controlled to continue moving along an extension direction of the moving trajectory, in response to an end position of the moving trajectory not reaching any display boundary. Further, the window interface is controlled to disappear, or the window interface is controlled to disappear gradually by displaying it in a way of moving out of the display screen of the first terminal, in response to the window interface moving to a second display boundary.

In some embodiments, if the moving trajectory does not intersect any display boundary of the specified region, the first terminal controls the window interface to move along the moving trajectory and in the direction of the moving trajectory. For example, when the first terminal controls the window interface to move to the end position of the moving trajectory, the first terminal controls the window interface to continue moving in the direction of the moving trajectory until the window interface intersects the display boundary of the specified display region. After the first terminal detects that the window interface intersects the display boundary of the specified display region, it controls the window interface to disappear from the display screen of the first terminal.

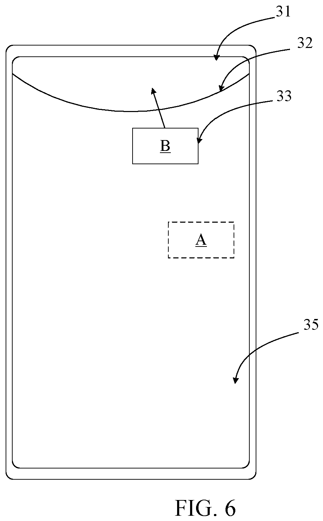

FIG. 6 is a schematic diagram illustrating an example of the moving trajectory not intersecting the first display boundary in the screen projection method according to embodiments of the present disclosure. As shown in FIG. 6, if the moving trajectory of the window interface 33 does not intersect any display boundary of the specified region, the first terminal controls the window interface 33 to continue moving along the moving trajectory and in the direction of the moving trajectory until the window interface 33 intersects a display boundary of the specified display region, for example, until the window interface 33 moves to the second display boundary 32. Then, the first terminal controls the window interface to disappear, as shown in Fig. 5.

Here, controlling the window interface to disappear from the display screen of the first terminal may include controlling, by the first terminal, the window interface to disappear from the display screen of the first terminal directly, or controlling the window interface to disappear gradually by displaying it in a way of moving out of the display screen of the first terminal.

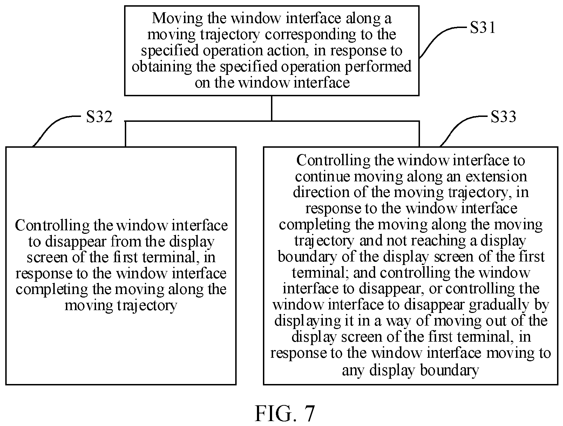

FIG. 7 is a flowchart of a responding process in response to obtaining the specified operation performed on the window interface in the screen projection method according to embodiments of the present disclosure. As shown in FIG. 7, the method further includes steps S31-S33 in response to obtaining the specified operation performed on the window interface.

At step S31, the window interface is moved along a moving trajectory corresponding to the specified operation, in response to obtaining the specified operation performed on the window interface.

The specified operation includes sliding the window interface with a pressure above a specified pressure threshold, or dragging the window interface over a distance greater than a specified distance threshold.

At step S32, the window interface is controlled to disappear from the display screen of the first terminal, in response to the window interface completing the moving along the moving trajectory.

At step S33, the window interface is controlled to continue moving along an extension direction of the moving trajectory, in response to the window interface completing the moving along the moving trajectory and not reaching a display boundary of the display screen of the first terminal. Then, the window interface is controlled to disappear, or the window interface is controlled to disappear gradually by displaying it in a way of moving out of the display screen of the first terminal, in response to the window interface moving to any display boundary.

In some embodiments, the specified operation may include dragging the window interface to a specified region on the display screen of the first terminal. The boundary of the specified region includes at least one display boundary of the display screen of the first terminal. The first terminal obtains the moving trajectory for dragging the window interface in response to the specified operation, and moves the window interface along the moving trajectory obtained.

A process for projecting and displaying the window interface on a second terminal will be described with reference to the following embodiments.

In some embodiments, before the first terminal projects the window interface onto the screen of the second terminal, the first terminal and the second terminal generally need to be connected with each other through, for example, a wireless network. If the first terminal and the second terminal are connected through the wireless network for the first time, it may be necessary to perform identity authentication on the first terminal and the second terminal. After the identity authentication is successful, the connection may be established, and corresponding screen projection connection information may be generated.

In some embodiments, after the connection between the first terminal and the second terminal is established successfully for the first time, the first terminal may be automatically connected to the second terminal according to the generated corresponding screen projection connection information when the first terminal is located within the same coverage of the wireless network as the second terminal at a later time.

In some embodiments, after the window interface of the first terminal disappears from the display screen of the first terminal, an instruction for the screen projection operation is triggered. The first terminal determines a second terminal that was connected to the first terminal normally, from history screen projection connection information of the first terminal and the second terminal, in response to the instruction for the screen projection operation, and then determines the second terminal on which the window interface is to be projected and displayed. The history screen projection connection information includes all or part of terminals that have established a screen projection connection with the first terminal.

In some embodiments, after the window interface of the first terminal disappears from the display screen of the first terminal, the instruction for the screen projection operation is triggered. The first terminal may display a list of display terminals including the second terminals on which the window interface may be projected and displayed, in response to the instruction for the screen projection operation. The list of display terminals may be displayed as a pop-up box on the display screen of the first terminal used by the user.

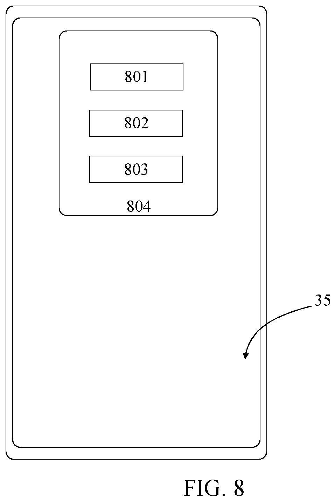

FIG. 8 is a schematic diagram illustrating an example of displaying the list of display terminals in the screen projection method according to embodiments of the present disclosure. As shown in FIG. 8, after the window interface disappears, the terminals that may be used for screen projection and display may be displayed in a pop-up box 801, including terminal 1, terminal 2, and terminal 3, and so on, which are all the terminals that may be used for screen projection and display are displayed. The user may determine one of the terminals in the list of display terminals as the second terminal on which the window interface is to be projected and displayed. The first terminal detects the second terminal selected from the list of display terminals, and determines the terminal selected by the user from the list of display terminals as the second terminal on which the window interface is to be projected and displayed in response to the selected second terminal. After the second terminal is determined, the first application user interface of the window interface may be projected onto the screen of the second terminal.

In some embodiments, the first application user interface may be displayed on the display screen of the first terminal. When the first terminal detects that the first application user interface quits a full-screen display state and is zoomed out to the window interface, the window interface may be controlled to quit the full-screen display state, in response to the specified operation of quitting the full-screen display state.

In some other embodiments, the window interface may be displayed in the full-screen display state. The specified operation of full-screen display may be performed based on the window interface, for controlling the window interface to be present in the full-screen display state.

In some embodiments, the screen projection method may project and display the window interface onto the screen of the second terminal by performing a specified operation on the window interface in the display screen of the first terminal. The first terminal of the user may obtain the specified operation performed by the user on the window interface, and control the window interface to move based on the specified operation obtained until the window interface disappears, in response to obtaining the specified operation, which triggers the screen projection operation of the first terminal. The second terminal used for screen projection and displaying may be determined based on the triggered screen projection operation of the first terminal, so as to project the contents displayed in the window interface onto the second terminal. The screen projection method according to the present disclosure is simple and convenient in operation, with a short response time.

Embodiments of the present disclosure also provide a screen projection apparatus. The screen projection apparatus includes hardware structures and/or software components for performing the above steps. Each component in the screen projection apparatus may be implemented by hardware, or software, or a combination of hardware and software. Whether a function is executed by hardware or in a manner of driving hardware by computer software depends on the specific application and design.

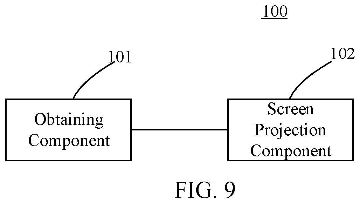

FIG. 9 is a block diagram of a screen projection apparatus 100 according to embodiments of the present disclosure. As illustrated in FIG. 9, the apparatus 100 includes an obtaining component 101 and a screen projection component 102.

The obtaining component 101 is configured to obtain a specified operation performed by a user on a window interface displayed on the first terminal. The screen projection component 102 is configured to project the window interface on a screen of a second terminal for display, in response to obtaining the specified operation performed on the window interface.

In some embodiments, the obtaining component 101 is configured to obtain a specified operation performed by the user on the window interface directly.

In some embodiments, the specified operation includes dragging the window interface to a specified region on a display screen of the first terminal, or sliding the window interface with a pressure above a specified pressure threshold, or dragging the window interface over a distance greater than a specified distance threshold.

In some embodiments, the specified operation includes dragging the window interface to the specified region on the display screen of the first terminal. A boundary of the specified region includes at least one display boundary of the display screen of the first terminal. The screen projection component 102 is further configured to: move the window interface along a moving trajectory corresponding to the specified operation; control the window interface to disappear from the display screen of the first terminal, or control the window interface to disappear gradually by displaying it in a way of moving out of the display screen of the first terminal, in response to the moving trajectory intersecting a first display boundary and the window interface moving to the first display boundary; control the window interface to continue moving along an extension direction of the moving trajectory, in response to an end position of the moving trajectory not reaching any display boundary; and control the window interface to disappear, or control the window interface to disappear gradually by displaying it in a way of moving out of the display screen of the first terminal, in response to the window interface moving to a second display boundary.

In some embodiments, the specified operation includes sliding the window interface with the pressure above the specified pressure threshold, or dragging the window interface over the distance greater than the specified distance threshold. The screen projection component 102 is further configured to: move the window interface along a moving trajectory corresponding to the specified operation; control the window interface to disappear from the display screen of the first terminal, in response to the window interface completing the moving along the moving trajectory; or control the window interface to continue moving along an extension direction of the moving trajectory, in response to the window interface completing the moving along the moving trajectory and not reaching a display boundary of the display screen of the first terminal; and control the window interface to disappear, or control the window interface to disappear gradually by displaying it in a way of moving out of the display screen of the first terminal, in response to the window interface moving to any display boundary.

In some embodiments, the screen projection component 102 is further configured to determine the second terminal for displaying of the window interface through projection by: determining the second terminal for displaying the window interface through projection based on history screen projection information of the first terminal, in which the history screen projection information includes all or part of terminals that have established a screen projection connection with the first terminal; or displaying a list of terminals, and determining a terminal selected from the list of terminals by the user as the second terminal for displaying the window interface through projection, in response to obtaining the terminal selected from the list of terminals by the user.

In some embodiments, the window interface is a floating window displayed on the first terminal.

In some embodiments, a first application user interface is displayed in the floating window. A second application user interface is further displayed on the first terminal. The floating window is floating above the second application user interface.

In some embodiments, the window interface includes a current active window of the first terminal, or an inactive window of the first terminal.

In some embodiments, the window interface is in a full-screen display state. The screen projection component 102 is further configured to control the window interface to quit the full-screen display state.

Regarding the apparatus according to the foregoing embodiments, specific operations performed by each component have been described in detail in the method embodiments, and thus will not be repeated here.

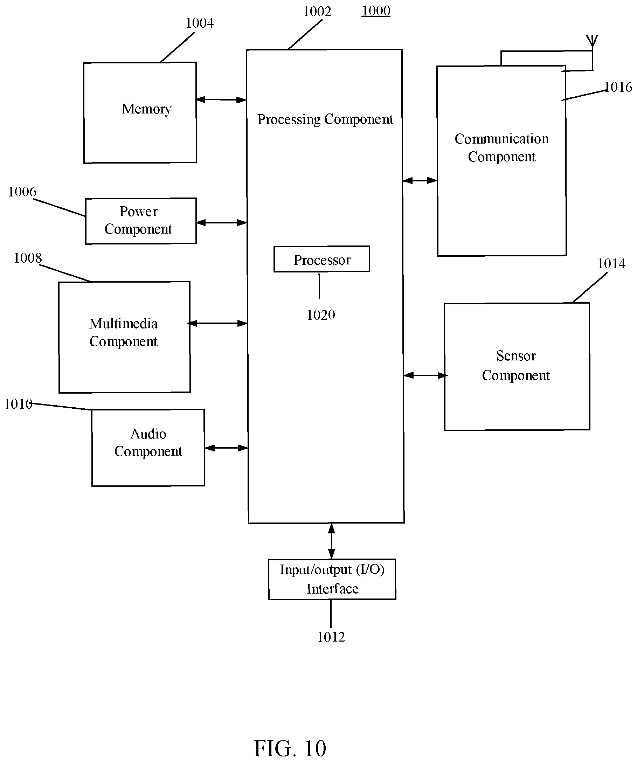

FIG. 10 is a block diagram of a screen projection device 1000 according to embodiments of the present disclosure. For example, the device 1000 may be any of the above described first terminal or second terminal, such as a mobile phone, a computer, a digital broadcast terminal, a messaging device, a game console, a tablet device, a medical device, an exercise device, a personal digital assistant, and so on.

Referring to FIG. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 normally controls the overall operation (such as operations associated with displaying, telephone calls, data communications, camera operations and recording operations) of the device 1000. The processing component 1002 may include one or more processors 1020 to execute instructions so as to perform all or part of the steps of the above described method. In addition, the processing component 1002 may include one or more units to facilitate interactions between the processing component 1002 and other components. For example, the processing component 1002 may include a multimedia unit to facilitate interactions between the multimedia component 1008 and the processing component 1002.

The memory 1004 is configured to store various types of data to support operations at the device 1000. Examples of such data include instructions for any application or method operated on the device 1000, contact data, phone book data, messages, images, videos and the like. The memory 1004 may be realized by any type of volatile or non-volatile storage devices, or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 1006 provides power to various components of the device 1000. The power component 1006 may include a power management system, one or more power sources and other components associated with power generation, management, and distribution of the device 1000.

The multimedia component 1008 includes a screen that provides an output interface between the device 1000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may sense not only the boundary of the touches or sliding actions, but also the duration and pressure related to the touches or sliding operations. In some embodiments, the multimedia component 1008 includes a front camera and/or a rear camera. When the device 1000 is in an operation mode such as a shooting mode or a video mode, the front camera and/or the rear camera may receive external multimedia data. Each front camera and rear camera may be a fixed optical lens system or have a focal length and an optical zoom capability.

The audio component 1010 is configured to output and/or input an audio signal. For example, the audio component 1010 includes a microphone (MIC) that is configured to receive an external audio signal when the device 1000 is in an operation mode such as a call mode, a recording mode, and a voice recognition mode. The received audio signal may be further stored in the memory 1004 or transmitted via the communication component 1016. In some embodiments, the audio component 1010 further includes a speaker for outputting audio signals.

The I/O interface 1012 provides an interface between the processing component 1002 and a peripheral interface unit. The peripheral interface unit may be a keyboard, a click wheel, a button and so on. These buttons may include, but are not limited to, a home button, a volume button, a start button, and a locking button.

The sensor assembly 1014 includes one or more sensors for providing the device 1000 with various aspects of status assessments. For example, the sensor component 1014 may detect an ON/OFF state of the device 1000 and a relative positioning of the components. For example, the components may be a display and a keypad of the device 1000. The sensor component 1014 may also detect a change in position of the device 1000 or a component of the device 1000, the presence or absence of contact of the user with the device 1000, the orientation or acceleration/deceleration of the device 1000 and a temperature change of the device 1000. The sensor component 1014 may include a proximity sensor configured to detect the presence of nearby objects without any physical contact. The sensor component 1014 may also include a light sensor (such as a CMOS or a CCD image sensor) for use in imaging applications. In some embodiments, the sensor component 1014 may further include an acceleration sensor, a gyro sensor, a magnetic sensor, a pressure sensor, or a temperature sensor.

The communication component 1016 is configured to facilitate wired or wireless communication between the device 1000 and other devices. The device 1000 may access a wireless network based on a communication standard such as Wi-Fi, 4G, or 5G, or a combination thereof. In some embodiments, the communication component 1016 receives broadcast signals or broadcast-associated information from an external broadcast management system via a broadcast channel. In some embodiments, the communication component 1016 further includes a near field communication (NFC) component to facilitate short range communication. For example, the NFC component may be implemented based on radio frequency identification (RFID) technology, infrared data association (IrDA) technology, ultra-wideband (UWB) technology, Bluetooth (BT) technology and other technologies.

In embodiments of the present disclosure, the device 1000 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, so as to perform the above method.

In the embodiments of the present disclosure, there is also provided a non-transitory computer readable storage medium including instructions, such as the memory 1004 including instructions. The instructions are executable by the processor 1020 of the device 1000 to perform the above method. For example, the non-transitory computer readable storage medium may be a ROM, a random access memory (RAM), a CD-ROM, a magnetic tape, a floppy disk, an optical data storage device, etc.

Terms used in the description of the present disclosure are merely for the purpose of describing embodiments, and should not be construed to limit the present disclosure. For example, the terms "first" and "second" are used to describe various types of information, but the information should not be limited to these terms. These terms are only used to distinguish the same type of information from each other, and do not indicate a specific order or degree of importance. For example, without departing from the scope of the present disclosure, first information may also be referred to as second information, and similarly, second information may also be referred to as first information. Also for example, the term "connection" includes a direct or indirect connection.

It may be further understood that although operations in the embodiments of the present disclosure are described in a specific order in the drawings, it should not be understood that these operations need to be performed in the specific order illustrated or in a serial order, or all the operations illustrated need to be performed so as to obtain a desired result. In certain circumstances, multitasking and parallel processing may be advantageous.

Other embodiments of the present disclosure will be apparent to those skilled in the art after considering the specification and practicing the present disclosure disclosed herein. The present disclosure is intended to cover any variations, uses or adaptive changes of the present disclosure, which are in accordance with general principles of the present disclosure and include common knowledge or technical means in the art that are not disclosed herein. The specification and embodiments are to be regarded as illustitive only, and the real scope of the present disclosure are pointed out in the attached claims.

It should be understood that the present disclosure is not limited to the precise structures described above and illustrated in the drawings, and various modifications and changes may be made without departing from the scope thereof. The scope of the present disclosure is only limited by the attached claims.

## Claims

1. A screen projection method, applied to a first terminal, comprising:
obtaining (S11) by the first terminal a specified operation performed by a user on a window interface displayed on the first terminal;
obtaining the specified operation performed by the user on the window interface directly and
projecting (S12) by the first terminal the window interface to a screen of a second terminal, in response to obtaining the specified operation performed on the window interface, so that the window interface is displayed on the screen of the second terminal;
wherein the specified operation comprises:
dragging the window interface to a specified region on the display screen of the first terminal, a boundary of the specified region comprising at least one display boundary of the display screen of the first terminal, and in response to obtaining the specified operation performed on the window interface, the method comprises:
moving (S21) the window interface along a moving trajectory corresponding to the specified operation;
in response to an end position of the moving trajectory not reaching any display boundary, controlling (S23) the window interface to continue moving along an extension direction of the moving trajectory; and
in response to the moving trajectory intersecting a first display boundary of the display screen of the first terminal and the window interface moving to the first display boundary, performing at least one of:
controlling (S22) the window interface to disappear from the display screen of the first terminal; and
controlling (S22) the window interface to disappear gradually by displaying the window interface in a way of moving out of the display screen of the first terminal;
**characterized in that**,
the window interface is a floating window displayed on the first terminal, wherein a first application user interface is displayed in the floating window, and a second application user interface is displayed on the first terminal, the floating window floating above the second application user interface.

2. The method of claim 1, wherein the specified operation further comprises at least one of:
sliding the window interface with a pressure above a specified pressure threshold; and
dragging the window interface over a distance greater than a specified distance threshold.

3. The method of claim 1 or 2, wherein in response to the window interface moving to a second display boundary of the display screen of the first terminal, performing at least one of:
controlling (S23) the window interface to disappear; and
controlling (S23) the window interface to disappear gradually by displaying the window interface in a way of moving out of the display screen of the first terminal.

4. The method of any one of claims 1 to 3, wherein the method further comprises determining the second terminal for displaying the window interface through projection, by at least one of:
determining the second terminal for displaying the window interface through projection, by at least one of:
determining the second terminal for displaying the window interface through projection based on history screen projection information of the first terminal, the history screen projection information comprising all or part of terminals that have established a screen projection connection with the first terminal; and
displaying a list of terminals, and determining a terminal selected from the list of terminals by the user as the second terminal for displaying the window interface through projection, in response to obtaining the terminal selected from the list of terminals by the user.

5. The method of any one of claims 1 to 4, wherein the window interface comprises at least one of:
a current active window of the first terminal; and
an inactive window of the first terminal.

6. The method of claim 5, wherein the window interface is in a full-screen display state; and
in response to obtaining the specified operation performed on the window interface, the method further comprises:
controlling the window interface to quit the full-screen display state.

7. A first terminal, comprising:
a processor; and
a memory for storing instructions executable by the processor,
wherein the processor is configured to:
obtain a specified operation performed by a user on a window interface displayed on the first terminal;
obtain the specified operation performed by the user on the window interface directly, and
project the window interface to a screen of a second terminal, in response to obtaining the specified operation performed on the window interface, so that the window interface is displayed on the screen of the second terminal;
wherein the specified operation comprises:
dragging the window interface to a specified region on a display screen of the first terminal, a boundary of the specified region comprising at least one display boundary of the display screen of the first terminal, and the processor is further configured to:
move the window interface along a moving trajectory corresponding to the specified operation;
in response to an end position of the moving trajectory not reaching any display boundary, control the window interface to continue moving along an extension direction of the moving trajectory; and
in response to the moving trajectory intersecting a first display boundary of the display screen of the first terminal and the window interface moving to the first display boundary, perform at least one of:
controlling the window interface to disappear from the display screen of the first terminal; and
controlling the window interface to disappear gradually by displaying the window interface in a way of moving out of the display screen of the first terminal;
**characterized in that**,
the window interface is a floating window displayed on the first terminal, wherein a first application user interface is displayed in the floating window, and a second application user interface is displayed on the first terminal, the floating window floating above the second application user interface.

8. The first terminal of claim 7, wherein the specified operation further comprises at least one of:
sliding the window interface with a pressure above a specified pressure threshold; and
dragging the window interface over a distance greater than a specified distance threshold.

9. The first terminal of claim 8, wherein the processor is further configured to:
in response to the window interface moving to a second display boundary of the display screen of the first terminal, perform at least one of:
controlling the window interface to disappear; and
controlling the window interface to disappear gradually by displaying the window interface in a way of moving out of the display screen of the first terminal.

10. The first terminal of claim 8, wherein the processor is further configured to determine the second terminal for displaying the window interface through projection by at least one of:
determining the second terminal for displaying the window interface through projection based on history screen projection information of the first terminal, the history screen projection information comprising all or part of terminals that have established a screen projection connection with the first terminal; and
displaying a list of terminals, and determining a terminal selected from the list of terminals by the user as the second terminal for displaying the window interface through projection, in response to obtaining the terminal selected from the list of terminals by the user.

11. The first terminal of any one of claims 7 to 10, wherein the window interface comprises at least one of:
a current active window of the first terminal; and
an inactive window of the first terminal.

12. The first terminal of claim 11, wherein when the window interface is in a full-screen display state, the processor is further configured to:
control the window interface to quit the full-screen display state.

13. A non-transitory computer-readable storage medium having stored thereon instructions that, when executed by a processor of a first terminal, cause the first terminal to perform the screen projection method of any one of claims 1 to 6.

## Patentansprüche

1. Bildschirmprojektionsverfahren, das bei einem ersten Endgerät angewendet wird, umfassend:
Erfassen (S11), mittels des ersten Endgeräts, einer bestimmten Bedienung,
die von einem Benutzer auf einer Fensterschnittstelle durchgeführt wird, die auf dem ersten Endgerät angezeigt wird;
direktes Erfassen der bestimmten Bedienung, die von dem Benutzer auf einer Fensterschnittstelle durchgeführt wird; und
Projizieren (S12), mittels des ersten Endgeräts, der Fensterschnittstelle auf einen Bildschirm eines zweiten Endgeräts als Reaktion auf das Erfassen der bestimmten Bedienung, die auf der Fensterschnittstelle durchgeführt wird, so dass die Fensterschnittstelle auf dem Bildschirm des zweiten Endgeräts angezeigt wird;
wobei die bestimmte Bedienung umfasst:
Ziehen der Fensterschnittstelle in einen bestimmten Bereich auf dem Anzeigebildschirm des ersten Endgeräts, wobei eine Grenze des bestimmten Bereichs mindestens eine Anzeigegrenze des Anzeigebildschirms des ersten Endgeräts umfasst, und wobei das Verfahren als Reaktion auf das Erfassen der bestimmten Bedienung, die auf der Fensterschnittstelle durchgeführt wird, umfasst:
Bewegen (S21) der Fensterschnittstelle entlang einer Bewegungsbahn, die der bestimmten Bedienung entspricht;
als Reaktion darauf, dass eine Endposition der Bewegungsbahn keine Anzeigegrenze erreicht, Steuern (S23) der Fensterschnittstelle, so dass diese sich weiterhin entlang einer Erstreckungsrichtung der Bewegungsbahn bewegt; und
als Reaktion darauf, dass die Bewegungsbahn eine erste Anzeigegrenze des Anzeigebildschirms des ersten Endgeräts schneidet und sich die Fensterschnittstelle zu der ersten Anzeigegrenze bewegt, Durchführen von mindestens einem aus:
Steuern (S22) der Fensterschnittstelle, so dass diese von dem Anzeigebildschirm des ersten Endgeräts verschwindet; und
Steuern (S22) der Fensterschnittstelle, so dass diese allmählich verschwindet, indem die Fensterschnittstelle so angezeigt wird, dass sie sich aus dem Anzeigebildschirm des ersten Endgeräts herausbewegt;
**dadurch gekennzeichnet, dass**
die Fensterschnittstelle ein schwebendes Fenster ist, das auf dem ersten Endgerät angezeigt wird, wobei eine erste Anwendungsbenutzerschnittstelle in dem schwebenden Fenster angezeigt wird, und eine zweite Anwendungsbenutzerschnittstelle oberhalb der zweiten Anwendungsbenutzerschnittstelle angezeigt wird.

2. Verfahren nach Anspruch 1, wobei die bestimmte Bedienung ferner mindestens eines aus Folgendem umfasst:
Verschieben der Fensterschnittstelle mit einem Druck, der über einem bestimmten Druckschwellenwert liegt; und
Ziehen der Fensterschnittstelle über eine Distanz, die größer ist als ein bestimmter Distanzschwellenwert.

3. Verfahren nach Anspruch 1 oder 2, wobei als Reaktion darauf, dass sich die Fensterschnittstelle zu einer zweiten Anzeigegrenze des Anzeigebildschirms des ersten Endgeräts bewegt, Durchführen von mindestens einem aus Folgendem:
Steuern (S23) der Fensterschnittstelle, so dass diese verschwindet; und
Steuern (23) der Fensterschnittstelle, so dass diese allmählich verschwindet, indem die Fensterschnittstelle so angezeigt wird, dass sie sich aus dem Anzeigebildschirm des ersten Endgeräts herausbewegt.

4. Verfahren nach einem der Ansprüche 1 bis 3, wobei das Verfahren ferner das Bestimmen des zweiten Endgeräts zur Anzeige der Fensterschnittstelle durch Projektion umfasst, mittels einem aus Folgendem:
Bestimmen des zweiten Endgeräts zur Anzeige der Fensterschnittstelle durch Projektion, mittels einem aus Folgendem:
Bestimmen des zweiten Endgeräts zur Anzeige der Fensterschnittstelle durch Projektion basierend auf Historieninformationen zur Bildschirmprojektion des ersten Endgeräts, wobei die Historieninformationen zur Bildschirmprojektion alle oder einen Teil der Endgeräte umfassen, die eine Bildschirmprojektionsverbindung mit dem ersten Endgerät hergestellt haben; und
Anzeigen einer Liste von Endgeräten, und Bestimmen eines Endgeräts, das von dem Benutzer aus der Liste von Endgeräten ausgewählt wird, als zweites Endgerät zur Anzeige der Fensterschnittstelle durch Projektion, als Reaktion auf das Erfassen des Endgeräts, das von dem Benutzer aus der Liste von Endgeräten ausgewählt wird.

5. Verfahren nach einem der Ansprüche 1 bis 4, wobei die Fensterschnittstelle mindestens eines aus Folgendem aufweist:
ein aktuelles aktives Fenster des ersten Endgeräts, und
ein inaktives Fenster des ersten Endgeräts.

6. Verfahren nach Anspruch 5, wobei sich die Fensterschnittstelle in einem Vollbildschirm-Anzeigezustand befindet; und
das Verfahren als Reaktion auf das Erfassen der bestimmten Bedienung, die auf der Fensterschnittstelle durchgeführt wird, ferner umfasst:
Steuern der Fensterschnittstelle, so dass diese den Vollbildschirm-Anzeigezustand verlässt.

7. Erstes Endgerät, das aufweist:
einen Prozessor; und
einen Speicher zum Speichern von durch den Prozessor ausführbaren Anweisungen,
wobei der Prozessor für Folgendes ausgebildet ist:
Erfassen einer bestimmten Bedienung, die von einem Benutzer auf einer Fensterschnittstelle durchgeführt wird, die auf dem ersten Endgerät angezeigt wird;
direktes Erfassen der bestimmten Bedienung, die von dem Benutzer auf der Fensterschnittstelle durchgeführt wird; und
Projizieren der Fensterschnittstelle auf einen Bildschirm eines zweiten Endgeräts als Reaktion auf das Erfassen der bestimmten Bedienung, die auf der Fensterschnittstelle durchgeführt wird, so dass die Fensterschnittstelle auf dem Bildschirm des zweiten Endgeräts angezeigt wird;
wobei die bestimmte Bedienung umfasst:
Ziehen der Fensterschnittstelle in einen bestimmten Bereich auf dem Anzeigebildschirm des ersten Endgeräts, wobei eine Grenze des bestimmten Bereichs mindestens eine Anzeigegrenze des Anzeigebildschirms des ersten Endgeräts umfasst, und wobei der Prozessor ferner für Folgendes ausgebildet ist:
Bewegen der Fensterschnittstelle entlang einer Bewegungsbahn, die der bestimmten Bedienung entspricht;
als Reaktion darauf, dass eine Endposition der Bewegungsbahn keine Anzeigegrenze erreicht, Steuern der Fensterschnittstelle, so dass diese sich weiterhin entlang einer Erstreckungsrichtung der Bewegungsbahn bewegt; und
als Reaktion darauf, dass die Bewegungsbahn eine erste Anzeigegrenze des Anzeigebildschirms des ersten Endgeräts schneidet und sich die Fensterschnittstelle zu der ersten Anzeigegrenze bewegt, Durchführen von mindestens einem aus:
Steuern der Fensterschnittstelle, so dass diese von dem Anzeigebildschirm des ersten Endgeräts verschwindet; und
Steuern der Fensterschnittstelle, so dass diese allmählich verschwindet, indem die Fensterschnittstelle so angezeigt wird, dass sie sich aus dem Anzeigebildschirm des ersten Endgeräts herausbewegt;
**dadurch gekennzeichnet, dass**
die Fensterschnittstelle ein schwebendes Fenster ist, das auf dem ersten Endgerät angezeigt wird, wobei eine erste Anwendungsbenutzerschnittstelle in dem schwebenden Fenster angezeigt wird, und eine zweite Anwendungsbenutzerschnittstelle oberhalb der zweiten Anwendungsbenutzerschnittstelle angezeigt wird.

8. Das erste Endgerät nach Anspruch 7, wobei die bestimmte Bedienung ferner mindestens eines aus Folgendem umfasst:
Verschieben der Fensterschnittstelle mit einem Druck, der über einem bestimmten Druckschwellenwert liegt; und
Ziehen der Fensterschnittstelle über eine Distanz, die größer ist als ein bestimmter Distanzschwellenwert.

9. Das erste Endgerät nach Anspruch 8, wobei der Prozessor ferner für Folgendes ausgebildet ist:
als Reaktion darauf, dass sich die Fensterschnittstelle zu einer zweiten Anzeigegrenze des Anzeigebildschirms des ersten Endgeräts bewegt, Durchführen von mindestens einem aus Folgendem:
Steuern der Fensterschnittstelle, so dass diese verschwindet; und
Steuern der Fensterschnittstelle, so dass diese allmählich verschwindet, indem die Fensterschnittstelle so angezeigt wird, dass sie sich aus dem Anzeigebildschirm des ersten Endgeräts herausbewegt.

10. Das erste Endgerät nach Anspruch 8, wobei der Prozessor ferner dazu ausgebildet ist, das zweite Endgerät zur Anzeige der Fensterschnittstelle durch Projektion mittels einem aus Folgendem zu bestimmen:
Bestimmen des zweiten Endgeräts zur Anzeige der Fensterschnittstelle durch Projektion basierend auf Historieninformationen zur Bildschirmprojektion des ersten Endgeräts, wobei die Historieninformationen zur Bildschirmprojektion alle oder einen Teil der Endgeräte umfassen, die eine Bildschirmprojektionsverbindung mit dem ersten Endgerät hergestellt haben; und
Anzeigen einer Liste von Endgeräten, und Bestimmen eines Endgeräts, das von dem Benutzer aus der Liste von Endgeräten ausgewählt wird, als zweites Endgerät zur Anzeige der Fensterschnittstelle durch Projektion, als Reaktion auf das Erfassen des Endgeräts, das von dem Benutzer aus der Liste von Endgeräten ausgewählt wird.

11. Das erste Endgerät nach einem der Ansprüche 7 bis 10, wobei die Fensterschnittstelle mindestens eines aus Folgendem aufweist:
ein aktuelles aktives Fenster des ersten Endgeräts, und
ein inaktives Fenster des ersten Endgeräts.

12. Das erste Endgerät nach Anspruch 11, wobei, wenn sich die Fensterschnittstelle in einem Vollbildschirm-Anzeigezustand befindet, der Prozessor ferner für Folgendes ausgebildet ist:
Steuern der Fensterschnittstelle, so dass diese den Vollbildschirm-Anzeigezustand verlässt.

13. Nichtflüchtiges computerlesbares Speichermedium, auf dem Anweisungen gespeichert sind, die bei Ausführung durch einen Prozessor eines ersten Endgeräts bewirken, dass das erste Endgerät das Bildschirmprojektionsverfahren nach einem der Ansprüche 1 bis 6 durchführt.

## Revendications

1. Procédé de projection d'écran, appliqué à un premier terminal, comprenant :
l'obtention (S11) par le premier terminal d'une opération spécifiée effectuée par un utilisateur sur une interface de fenêtre affichée sur le premier terminal ;
l'obtention de l'opération spécifiée effectuée par l'utilisateur directement sur l'interface de la fenêtre et
la projection (S12) par le premier terminal de l'interface de la fenêtre sur un écran d'un second terminal, en réponse à l'obtention de l'opération spécifiée effectuée sur l'interface de la fenêtre, de sorte que l'interface de la fenêtre soit affichée sur l'écran du second terminal ;
dans lequel l'opération spécifiée comprend :
le déplacement de l'interface de la fenêtre vers une région spécifiée de l'écran d'affichage du premier terminal, une limite de la région spécifiée comprenant au moins une limite d'affichage de l'écran d'affichage du premier terminal, et en réponse à l'obtention de l'opération spécifiée effectuée sur l'interface de la fenêtre, le procédé consiste à :
déplacer (S21) l'interface de la fenêtre le long d'une trajectoire de déplacement correspondant à l'opération spécifiée ;
en réponse à une position finale de la trajectoire de déplacement n'atteignant aucune limite d'affichage, commander (S23) l'interface de la fenêtre pour qu'elle continue à se déplacer le long d'une direction d'extension de la trajectoire de déplacement ; et
en réponse à l'intersection de la trajectoire de déplacement avec une première limite d'affichage de l'écran d'affichage du premier terminal et au déplacement de l'interface de la fenêtre vers la première limite d'affichage, effectuer l'une parmi :
la commande (S22) de la disparition de l'interface de la fenêtre de l'écran d'affichage du premier terminal ; et
la commander (S22) de la disparition progressive de l'interface de la fenêtre en affichant l'interface de la fenêtre de manière à sortir de l'écran d'affichage du premier terminal ;
**caractérisé en ce que,**
l'interface de la fenêtre est une fenêtre flottante affichée sur le premier terminal, dans lequel une première interface utilisateur d'application est affichée dans la fenêtre flottante, et une seconde interface utilisateur d'application est affichée sur le premier terminal, la fenêtre flottante flottant au-dessus de la seconde interface utilisateur d'application.

2. Procédé selon la revendication 1, dans lequel l'opération spécifiée comprend en outre au moins l'un parmi :
le glissement de l'interface de la fenêtre avec une pression supérieure à un seuil de pression spécifié ; et
le traînement de l'interface de la fenêtre sur une distance supérieure à un seuil de distance spécifié.

3. Procédé selon la revendication 1 ou 2, dans lequel, en réponse au déplacement de l'interface de la fenêtre vers une seconde limite d'affichage de l'écran d'affichage du premier terminal, l'exécution d'une parmi :
la commande (S23) de la disparition de l'interface de la fenêtre ; et
la commander (S23) de la disparition progressive de l'interface de la fenêtre en affichant l'interface de la fenêtre de manière à sortir de l'écran d'affichage du premier terminal.

4. Procédé selon l'une quelconque des revendications 1 à 3, dans lequel le procédé comprend en outre la détermination du second terminal pour l'affichage de l'interface de la fenêtre par projection, par au moins l'une parmi :
la détermination du second terminal pour l'affichage de l'interface de la fenêtre par projection, par au moins l'un parmi :
la détermination du second terminal pour l'affichage de l'interface de la fenêtre par projection sur la base des informations d'historique de projection d'écran du premier terminal, les informations d'historique de projection d'écran comprenant tout ou partie des terminaux qui ont établi une connexion de projection d'écran avec le premier terminal ; et
l'affichage d'une liste de terminaux, et la détermination d'un terminal sélectionné dans la liste de terminaux par l'utilisateur comme second terminal pour l'affichage de l'interface de la fenêtre par projection, en réponse à l'obtention du terminal sélectionné dans la liste de terminaux par l'utilisateur.

5. Procédé selon l'une quelconque des revendications 1 à 4, dans lequel l'interface de la fenêtre comprend au moins l'une parmi :
une fenêtre active courante du premier terminal ; et
une fenêtre inactive du premier terminal.

6. Procédé selon la revendication 5, dans lequel l'interface de la fenêtre est dans un état d'affichage plein écran ; et
en réponse à l'obtention de l'opération spécifiée effectuée sur l'interface de la fenêtre, le procédé comprend en outre :
la commande de l'interface de la fenêtre pour quitter l'état d'affichage plein écran.

7. Premier terminal, comprenant :
un processeur ; et
une mémoire permettant de stocker des instructions exécutables par le processeur,
dans lequel le processeur est configuré pour :
obtenir une opération spécifiée effectuée par un utilisateur sur une interface de la fenêtre affichée sur le premier terminal ;
obtenir l'opération spécifiée effectuée par l'utilisateur directement sur l'interface de la fenêtre, et
projeter l'interface de la fenêtre sur l'écran d'un second terminal, en réponse à l'obtention de l'opération spécifiée effectuée sur l'interface de la fenêtre, de sorte que l'interface de la fenêtre soit affichée sur l'écran du second terminal ;
dans lequel l'opération spécifiée comprend :
le traînement de interface de la fenêtre vers une région spécifiée de l'écran d'affichage du premier terminal, une limite de la région spécifiée comprenant au moins une limite d'affichage de l'écran d'affichage du premier terminal, et le processeur est en outre configuré pour :
déplace l'interface de la fenêtre le long d'une trajectoire de déplacement correspondant à l'opération spécifiée ;
en réponse à une position finale de la trajectoire de déplacement n'atteignant aucune limite d'affichage, commander l'interface de la fenêtre pour qu'elle continue à se déplacer le long d'une direction d'extension de la trajectoire de déplacement ; et
en réponse à l'intersection de la trajectoire de déplacement avec une première limite d'affichage de l'écran d'affichage du premier terminal et au déplacement de l'interface de la fenêtre vers la première limite d'affichage, effectuer au moins l'une parmi :
la commande de la disparition de l'interface de la fenêtre de l'écran d'affichage du premier terminal ;
et
la commande de la disparition progressive de l'interface de la fenêtre en affichant l'interface de la fenêtre de manière à la déplacer en dehors de l'écran d'affichage du premier terminal ;
**caractérisé en ce que,**
l'interface de la fenêtre est une fenêtre flottante affichée sur le premier terminal, dans lequel une première interface utilisateur d'application est affichée dans la fenêtre flottante, et une seconde interface utilisateur d'application est affichée sur le premier terminal, la fenêtre flottante flottant au-dessus de la seconde interface utilisateur d'application.

8. Premier terminal selon la revendication 7, dans lequel l'opération spécifiée comprend au moins l'un parmi :
le glissement de l'interface de la fenêtre avec une pression supérieure à un seuil de pression spécifié ; et
le traînement de l'interface de la fenêtre sur une distance supérieure à un seuil de distance spécifié.

9. Dispositif selon la revendication 8, dans lequel le processeur est en outre configuré pour :
en réponse au déplacement de l'interface de la fenêtre vers une seconde limite d'affichage de l'écran d'affichage du premier terminal, effectuer au moins l'une parmi :
la commande de la disparition de l'interface de la fenêtre ; et
la commande de la disparition progressive de l'interface de la fenêtre en affichant l'interface de la fenêtre de manière à la déplacer en dehors de l'écran d'affichage du premier terminal.

10. Premier terminal selon la revendication 8, dans lequel le processeur est en outre configuré pour déterminer le second terminal pour l'affichage de l'interface de la fenêtre par projection par au moins l'un parmi :
la détermination du second terminal pour l'affichage de l'interface de la fenêtre par projection sur la base des informations d'historique de projection d'écran du premier terminal, les informations d'historique de projection d'écran comprenant tout ou partie des terminaux qui ont établi une connexion de projection d'écran avec le premier terminal ; et
l'affichage d'une liste de terminaux, et la détermination d'un terminal sélectionné dans la liste de terminaux par l'utilisateur comme second terminal pour l'affichage de l'interface de la fenêtre par projection, en réponse à l'obtention du terminal sélectionné dans la liste de terminaux par l'utilisateur.

11. Premier terminal selon l'une quelconque des revendications 7 à 10, dans lequel l'interface de la fenêtre comprend au moins l'une parmi :
une fenêtre active courante du premier terminal ; et
une fenêtre inactive du premier terminal.

12. Premier terminal selon la revendication 11, dans lequel, lorsque l'interface de la fenêtre est dans un état d'affichage plein écran, le processeur est en outre configuré pour :
commander la fermeture de l'état d'affichage plein écran par l'interface de la fenêtre.

13. Support de stockage non transitoire lisible par ordinateur, sur lequel sont stockées des instructions qui, lorsqu'elles sont exécutées par un processeur d'un premier terminal, amènent le premier terminal à effectuer le procédé de projection d'écran selon l'une quelconque des revendications 1 à 6.
